# EUROPÄISCHE PATENTSCHRIFT

(11) **EP 2 571 713 B1**
(45) Veröffentlichungstag und Bekanntmachung des Hinweises auf die Patenterteilung: **17.07.2019**
(21) Anmeldenummer: 11714934.4
(22) Anmeldetag: 31.03.2011
(51) Int. Cl.: B60K 37/06

(54) **VERFAHREN UND VORRICHTUNG ZUM ANZEIGEN VON INFORMATIONEN AUF EINER ANZEIGEFLÄCHE**
METHOD AND DEVICE FOR DISPLAYING INFORMATION ON A DISPLAY AREA
PROCÉDÉ ET DISPOSITIF D'AFFICHAGE D'INFORMATIONS SUR UN ÉCRAN

(30) Priorität: 18.05.2010 DE 102010020893
(43) Veröffentlichungstag der Anmeldung: 27.03.2013
(73) Patentinhaber: Volkswagen Aktiengesellschaft, 38436 Wolfsburg (DE)
(72) Erfinder: DEHMANN, Rainer, 10961 Berlin (DE)
(86) Internationale Anmeldenummer: PCT/EP2011/001623
(87) Internationale Veröffentlichungsnummer: WO 2011/144275

(56) Entgegenhaltungen:
- WO-A2-02/39712
- DE-A1-102007 039 442

## Beschreibung

Die vorliegende Erfindung betrifft ein Verfahren zum Anzeigen von Informationen auf einer Anzeigefläche, bei dem mittels einer Steuervorrichtung ein Übergang von einer ersten Darstellung in eine zweite Darstellung auf der Anzeigefläche erzeugt wird. Bei diesem Übergang wird zumindest ein erstes graphisches Objekt auf der Anzeigefläche bewegt. Ferner wird bei dem Verfahren in der zweiten Darstellung zumindest ein zweites graphisches Objekt auf einer Eingabe in einem Bewegungsmuster bewegt, um die Eingabe zu visualisieren. Ferner betrifft die Erfindung eine Vorrichtung zum Anzeigen von Informationen zur Durchführung dieses Verfahrens.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

Als weitere Anzeigeeinrichtung besitzt ein Fahrzeug häufig eine Multifunktionsanzeige in der Mittelkonsole oder oberhalb der Mittelkonsole, der ein Bedienelement zugeordnet ist. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Bei der Anzeige von Informationen in einem Kraftfahrzeug ergeben sich sehr spezielle Anforderungen an die Struktur der Anzeige. Die Informationen müssen nämlich so angezeigt werden, dass die Informationsaufnahme auch einfach und intuitiv durch den Fahrer des Kraftfahrzeugs erfolgen kann. Insbesondere sollte die Informationsaufnahme durch den Fahrer nicht zu einer Ablenkung während der Fahrt führen.

Aus der DE 10 2007 039 442 A1 ist ein Verfahren zum Anzeigen von Informationen in einem Kraftfahrzeug bekannt, bei dem graphische Objekte auf einem virtuellen, perspektivisch dargestellten Ring angeordnet dargestellt werden und bei dem auf eine Eingabe eines Nutzers die Graphikdaten so verändert werden, dass sich die Objekte auf dem virtuellen Ring karussellartig drehen.

Wenn durch einen Bedienvorgang graphische Objekte bewegt werden können, ergibt sich das Problem, dass es für den Nutzer intuitiv erkennbar werden sollte, welches Bewegungsmuster bei einer bestimmten Darstellung für einen Bedienvorgang ausgeführt werden kann. Aus diesem Grund sind beispielsweise bei einer Eingabe über eine berührungsempfindliche Oberfläche Eingabegesten definiert worden, welche Bewegungen umfassen, die ein Nutzer mit körperlichen Gegenständen ausführen würde. Bei der Darstellung eines virtuellen Ringes kann der Nutzer beispielsweise zur Bedienung eine Bewegung ausführen, die einer Bewegung gleicht, die er ausführen würde, wenn er Gegenstände auf einem Ring karussellartig drehen würde.

Der vorliegenden Erfindung liegt daher die Aufgabe zugrunde, ein Verfahren und eine Vorrichtung der eingangs genannten Art anzugeben, bei denen dem Nutzer das Bewegungsmuster des zweiten graphischen Objekts für eine Eingabe in der zweiten Darstellung intuitiv vermittelt wird.

Erfindungsgemäß wird diese Aufgabe durch ein Verfahren mit den Merkmalen des Anspruchs 1 und eine Vorrichtung mit den Merkmalen des Anspruchs 6 gelöst. Vorteilhafte Ausgestaltungen und Weiterbildungen ergeben sich aus den abhängigen Ansprüchen.

Bei dem erfindungsgemäßen Verfahren steuert die Steuervorrichtung die Anzeigefläche:
- beim Übergang zumindest ein erstes graphisches Objekt auf der Anzeigefläche bewegt wird, und
- in der zweiten Darstellung zumindest ein zweites graphisches Objekt auf eine Eingabe in einem Bewegungsmuster bewegt wird, um die Eingabe zu visualisieren, wobei
- beim Übergang von der ersten Darstellung in die zweite Darstellung die Steuervorrichtung die Anzeigefläche so ansteuert, dass das erste graphische Objekt in demselben Bewegungsmuster bewegt wird, wie bei der Visualisierung der Eingabe in der zweiten Darstellung, wobei das Bewegungsmuster einer Bedienbewegung bei der Eingabe entspricht.

Bereits beim Übergang in die zweite Darstellung wird dem Betrachter somit vermittelt, wie zumindest ein graphisches Objekt in der zweiten Darstellung auf oder für eine Eingabe bewegt wird. Das dargestellte Bewegungsmuster kann insbesondere einer Bedienbewegung bei der Eingabe entsprechen, so dass dem Betrachter bereits durch die Animation beim Übergang in die zweite Darstellung eine Bedienungsanleitung für eine Bedienung in der zweiten Darstellung gegeben wird. Dadurch wird erreicht, dass der Nutzer eine Eingabe in der zweiten Darstellung schneller ausführen kann, da er nicht mehr beispielsweise in einer Bedienungsanleitung die Art einer Bedienbewegung nachschauen muss, oder verschiedene Bedienbewegungen ausprobieren muss.

Bei einer Eingabe kann es sich in diesem Fall um die Bewegung eines ausgewählten graphischen Objekts handeln. Ferner kann bei der Auswahl eines graphischen Objekts, eine Funktion ausgeführt werden, die dem Objekt zugeordnet ist, wobei die Auswahl des graphischen Objekts durch das Bewegungsmuster visualisiert wird.

Das Bewegungsmuster ist insbesondere eine Bewegung auf einer Trajektorie. Die Trajektorie kann beispielsweise eine perspektivische Darstellung einer dreidimensionalen Bewegung sein. Beim Übergang in die zweite Darstellung kann z. B. das graphische Objekt auf zumindest einem Abschnitt der Trajektorie bewegt werden. Die Richtung der Bewegung beim Übergang in die zweite Darstellung kann der Bewegungsrichtung der Bewegung des graphischen Objekts bei oder nach der Eingabe in der zweiten Darstellung entsprechen. Die Bewegungsrichtung kann jedoch auch entgegengesetzt sein.

Das Bewegungsmuster kann z. B. eine Dreh- oder Schwenkbewegung sein. Das Bewegungsmuster kann jedoch auch eine Bewegung auf einer geraden Strecke sein.

Gemäß einer Weiterbildung des erfindungsgemäßen Verfahrens entspricht die Geschwindigkeit und/oder Beschleunigung des graphischen Objekts beim Übergang von der ersten Darstellung in die zweite Darstellung der Geschwindigkeit und/oder der Beschleunigung bei der Visualisierung der Eingabe in der zweiten Darstellung. Hierdurch wird erreicht, dass der Betrachter das Bewegungsmuster beim Übergang in die zweite Darstellung bei der Visualisierung der Eingabe in der zweiten Darstellung besonders einfach wiedererkennt.

Die erfindungsgemäße Vorrichtung zum Anzeigen von Informationen umfasst eine Anzeigefläche und eine Steuervorrichtung zum Steuern der Anzeige auf der Anzeigefläche. Mittels der Steuervorrichtung ist ein Übergang von einer ersten Darstellung in eine zweite Darstellung auf der Anzeigefläche erzeugbar, wobei bei diesem Übergang zumindest ein erstes graphisches Objekt auf der Anzeigefläche bewegt werden. Des Weiteren umfasst die Vorrichtung eine Eingabevorrichtung, die mit der Steuervorrichtung gekoppelt ist, wobei mittels der Steuervorrichtung die Anzeigefläche so ansteuerbar ist, dass in der zweiten Darstellung zur Visualisierung einer mittels der Eingabevorrichtung ausgeführten Eingabe zumindest ein zweites graphisches Objekt, das dem ersten Objekt entsprechen kann, in einem Bewegungsmuster bewegt wird. Des Weiteren ist mittels der Steuervorrichtung die Anzeigevorrichtung so ansteuerbar, dass beim Übergang von der ersten Darstellung in die zweite Darstellung das erste graphische Objekt in demselben Bewegungsmuster bewegt wird, wie bei der Visualisierung der Eingabe in der zweiten Darstellung.

Das erfindungsgemäße Verfahren wird insbesondere in einem Fahrzeug eingesetzt. In diesem Fall wird die die Geschwindigkeit des Fahrzeugs gemessen. Das erfindungsgemäße Verfahren kann nun an den Betrieb des Fahrzeugs angepasst werden, indem die Bewegung der graphischen Objekte auf der Anzeigefläche bei den Animationen des Verfahrens mittels der Steuervorrichtung an die Geschwindigkeit des Fahrzeugs angepasst wird. Bei dem erfindungsgemäßen Verfahren kann die Bewegung der graphischen Objekte somit speziell an die Situationen angepasst werden, in denen das Fahrzeug betrieben wird.

Die erfindungsgemäße Vorrichtung ist insbesondere so ausgebildet, dass sie das vorstehend beschriebene Verfahren insgesamt oder teilweise ausführen kann. Die erfindungsgemäße Vorrichtung weist somit auch dieselben Vorteile wie das so genannte erfindungsgemäße Verfahren auf.

Die Eingabeeinrichtung der erfindungsgemäßen Vorrichtung umfasst insbesondere eine berührungsempfindliche Oberfläche auf der Anzeigefläche.

Schließlich betrifft die Erfindung ein Fahrzeug, welches mit der vorstehend beschriebenen Vorrichtung ausgestattet ist.

Im Folgenden wird ein Ausführungsbeispiel der Erfindung mit Bezug zu den Zeichnungen erläutert.
- Figur 1: zeigt schematisch den Aufbau eines Ausführungsbeispiels der erfindungsgemäßen Vorrichtung zum Anzeigen von Informationen,
- die Figuren 2-9: zeigen Darstellungen auf einer Anzeigefläche, die von einem Ausführungsbeispiel des erfindungsgemäßen Verfahrens gemäß einem ersten Aspekt erzeugt werden,
- die Figuren 10-23: zeigen Darstellungen auf einer Anzeigefläche, die von einem Ausführungs-beispiel des erfindungsgemäßen Verfahrens gemäß einem zweiten und einem dritten Aspekt erzeugt werden.

Die Vorrichtung zum Anzeigen von Informationen umfasst eine Anzeigeeinrichtung 1 mit einer Anzeigefläche 2. Die Anzeigefläche 2 kann von einem Display, insbesondere einem Flüssigkristalldisplay, beliebiger Bauart bereitgestellt werden. Ferner kann es sich bei der Anzeigeeinrichtung 1 um eine Projektionseinrichtung handeln, wie z. B. ein Head-up- oder Head-down-Display in einem Fahrzeug.

Die Anzeigeeinrichtung 1 ist mit einer Steuervorrichtung 3 datentechnisch gekoppelt. Die Steuervorrichtung 3 erzeugt Graphikdaten zur Informationsdarstellung auf der Anzeigefläche 2. Von der Steuervorrichtung 3 können nicht nur statische Anzeigebilder erzeugt werden, sondern insbesondere auch Animationen, die Übergänge zwischen verschiedenen Anzeigemodi durch eine Bewegung von graphischen Objekten visualisieren. Ferner können die Animationen Bewegungen einzelner graphischer Objekte in einem bestimmten Anzeigemodus betreffen oder die Bewegung eines graphischen Objekts von einer ersten Darstellung eines Anzeigemodus in eine zweite Darstellung. Bei den Animationen kann es sich insbesondere um so genannte Schlüsselbildanimationen handeln, bei denen die Einzelbilder zwischen zwei Schlüsselbildern einer Animation erzeugt werden, um den Eindruck einer flüssigen Veränderung zu erwecken. Die zwischen den Schlüsselbildern entstandenen Bilder werden auch als Inbetweens und das Erzeugen der Schlüsselbildanimation als Tweening bezeichnet. Zum Erzeugen der Graphikdaten und zum Ausführen der Animationen ist die Steuervorrichtung 3 mit einem Speicher 5 und einer Systemuhr 4 datentechnisch gekoppelt.

Des Weiteren ist eine Eingabeeinrichtung vorgesehen. Die Eingabeeinrichtung kann insbesondere eine berührungsempfindliche Oberfläche umfassen, die separat von der Anzeigefläche 2 vorgesehen ist, so dass ein so genanntes Touchpad gebildet ist, oder die auf der Anzeigefläche 2 vorgesehen ist, so dass ein so genannter Touchscreen bereitgestellt wird. Des Weiteren kann die Eingabeeinrichtung, die das Touchpad oder den Touchscreen umfasst, eine Annäherungserfassungsvorrichtung umfassen, welche dje Annäherung eines Betätigungselements, wie z. B. insbesondere die Fingerspitze eines Nutzers, an die berührungsempfindliche Oberfläche erfasst. In Abhängigkeit von der Annäherung eines solchen Betätigungselements an die berührungsempfindliche Oberfläche kann die angezeigte Information verändert werden.

Des Weiteren kann die Eingabeeinrichtung eine an sich bekannte Einrichtung zum Erfassen und Auswerten einer Geste eines Körperteils eines Nutzers sein. Beispielsweise kann die Hand eines Nutzers vor der Anzeigefläche 2 eine Geste ausführen. Die dreidimensionale Position der Hand in einem bestimmten Aufenthaltsbereich vor der Anzeigefläche 2 wird erfasst und als Eingabe interpretiert. In diesem Fall ist es nicht erforderlich, dass der Nutzer die Anzeigefläche 2 berührt.

Schließlich kann als Eingabeeinrichtung ein abgesetztes Bedienelement eingesetzt werden, insbesondere ein mechanisches Bedienelement. Bei dem mechanischen Bedienelement kann es sich um ein Drehsteller oder einen an sich bekannten Drehdrücksteller handeln. Mittels dieses Bedienelements sind graphische Objekte, die auf der Anzeigefläche 2 angezeigt werden, ansteuerbar, veränderbar und auswählbar.

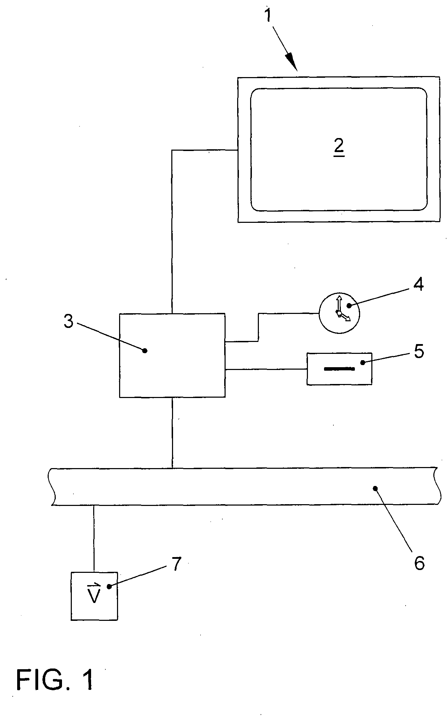

Die Steuervorrichtung 3 ist ferner mit weiteren Einrichtungen verbunden, welche der Steuervorrichtung 3 Daten für die Anzeige auf der Anzeigefläche 2 übermitteln. In dem in Fig. 1 gezeigten Ausführungsbeispiel wird die Vorrichtung in einem Fahrzeug, insbesondere einem Kraftfahrzeug, eingesetzt. Die Steuervorrichtung 3 ist in diesem Fall mit einem Datenbus 6 des Fahrzeugs verbunden. Der Datenbus 6 ist wiederum mit vielfältigen Einrichtungen im Fahrzeug gekoppelt, insbesondere mit einer Messvorrichtung 7 zum Messen der Geschwindigkeit des Fahrzeugs. Die aktuelle Fahrzeuggeschwindigkeit kann somit von der Messvorrichtung 7 über den Datenbus 6 an die Steuervorrichtung 3 übertragen werden.

Im Folgenden wird ein erster Aspekt des erfindungsgemäßen Verfahrens erläutert, welches von der mit Bezug zu Fig. 1 beschriebenen Vorrichtung ausgeführt werden kann. In diesem Fall wird die Vorrichtung bzw. das Verfahren in einem Fahrzeug eingesetzt.

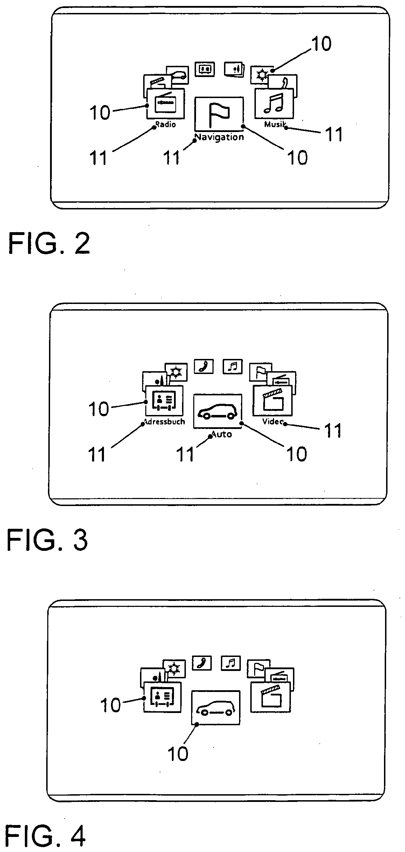

Die Informationen werden bei dem Verfahren in einer hierarchischen Struktur angezeigt. Ausgangspunkt für diese hierarchische Struktur ist die in Fig. 2 gezeigte Wiedergabe auf der Anzeigefläche 2. Es werden mehrere graphische Objekte 10 auf einem virtuellen, perspektivisch dargestellten Ring angeordnet dargestellt. Die perspektivische Darstellung zeigt den virtuellen Ring so, als ob der Betrachter von schräg oben auf den Ring schaut. Dabei wird ein graphisches Objekt 10 im Vordergrund in der perspektivischen Darstellung am größten dargestellt. Nach hinten werden weitere graphische Objekte 10, zum Teil von vor ihn befindlichen Objekten 10 verdeckt, dargestellt. Insgesamt werden bei dem Ausführungsbeispiel neun oder mehr graphische Objekte 10 angezeigt.

Die graphischen Objekte 10 sind als Schaltflächen ausgebildet, so dass sie vom Nutzer mittels der Eingabeeinrichtung markiert bzw. ausgewählt werden können. Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind.

Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche 2 erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche erfolgen.

Die graphischen Objekte 10 umfassen Symbole, die dem Nutzer Hinweise auf die Funktion des Objekts geben. Ferner können zumindest einige graphische Objekte 10 Beschriftungen 11 aufweisen, welche die Funktion nochmals alphanumerisch erläutert. Bei der Darstellung der Objekte 10 auf dem perspektivisch gezeigten Ring werden insbesondere Beschriftungen 11 für die im Vordergrund dargestellten Objekte 10 wiedergegeben.

Der Nutzer kann mittels der Eingabeeinrichtung die Objekte 10 auf dem perspektivisch dargestellten Ring karussellartig drehen. Beispielsweise kann der Nutzer mittels der Eingabeeinrichtung beliebige graphische Objekte 10 in den Vordergrund bringen und auswählen. In Fig. 2 ist beispielsweise ein graphisches Objekt 10 im Vordergrund dargestellt, welches dem Navigationssystem eines Fahrzeugs zugeordnet ist, in Fig. 3 ist ein graphisches Objekt 10 im Vordergrund dargestellt, welches verschiedenen Anzeigen von Betriebsparametern des Fahrzeugs zugeordnet ist. Details zur Anzeige und Steuerung der graphischen Objekte 10 in dem Anzeigemodus, der in den Fig. 2 und 3 gezeigt ist, sind in der DE 10 2007 039 442 A1 beschrieben.

Bei dem erfindungsgemäßen Verfahren können die graphischen Objekte 11 jedoch nicht nur in dem in den Fig. 2 und 3 gezeigten ersten Anzeigemodus dargestellt werden. Es ist ein zweiter Anzeigemodus definiert, in dem dieselben graphischen Objekte 10 in einer anderen Art und Weise, d. h. in einem anderen Layout, angezeigt werden. Es hat sich nämlich herausgestellt, dass die Anzeige auf dem perspektivisch dargestellten Ring des ersten Anzeigemodus während der Fahrt im Fahrzeug vom Fahrer dann schwer erfasst und bedient werden kann, wenn mehr als acht graphische Objekte 10 dargestellt werden. Aus diesem Grund wird bei dem erfindungsgemäßen Verfahren der Anzeigemodus in Abhängigkeit von der Fahrzeuggeschwindigkeit automatisch ausgewählt. Bewegt sich das Fahrzeug in einem ersten Geschwindigkeitsbereich, werden die graphischen Objekte 10 in dem ersten Anzeigemodus angezeigt. Bewegt sich das Fahrzeug in einem anderen, zweiten Geschwindigkeitsbereich, werden die graphischen Objekte 10 in dem später beschriebenen zweiten Anzeigemodus dargestellt. Die beiden Geschwindigkeitsbereiche grenzen einander an, wobei eine Grenzgeschwindigkeit definiert ist. Wird diese Grenzgeschwindigkeit über- oder unterschritten, erfolgt automatisch ein Wechsel von dem einen Anzeigemodus in den anderen Anzeigemodus. Die Grenzgeschwindigkeit liegt beispielsweise in einem Bereich von 4 km/h bis 20 km/h, insbesondere in einem Bereich von 5 km/h bis 10 km/h und bevorzugt in einem Bereich von 5 km/h bis 8 km/h. In dem hier beschriebenen Ausführungsbeispiel wurde ein Grenzwert für die Geschwindigkeit von 6 km/h gewählt.

Für den Übergang von dem einen Anzeigemodus in den anderen Anzeigemodus kann ferner eine Hysterese durchlaufen werden, die beispielsweise in einem Bereich von 2 km/h bis 5 km/h liegen kann. Ist beispielsweise bei einer Grenzgeschwindigkeit von 6 km/h eine Hysterese von 2 km/h definiert, wechselt der Anzeigemodus, wenn die Fahrzeuggeschwindigkeit 8 km/h überschreitet. Verringert sich daraufhin die Geschwindigkeit wieder, wechselt der Anzeigemodus jedoch erst wieder, wenn die Geschwindigkeit 4 km/h unterschritten hat. Steigt daraufhin die Fahrzeuggeschwindigkeit wieder, wird erneut erst bei einer Geschwindigkeit von 8 km/h der Anzeigemodus gewechselt. Für die Hysterese werden somit zwei Grenzgeschwindigkeiten oberhalb und unterhalb der mittleren Grenzgeschwindigkeit definiert.

Die Fahrzeuggeschwindigkeit wird fortwährend von der Messvorrichtung 7 an die Steuervorrichtung 3 übertragen. Wird der Grenzwert für die Fahrzeuggeschwindigkeit überschritten bzw. unterschritten, erzeugt die Steuervorrichtung 3 eine Animation für den Übergang von dem einen Anzeigemodus in den anderen Anzeigemodus. Die Anzeige auf der Anzeigefläche 2 verändert sich somit nicht abrupt, sondern in einem fließenden Übergang, so dass der Nutzer die Orientierung in der hierarchischen Anzeigestruktur behält.

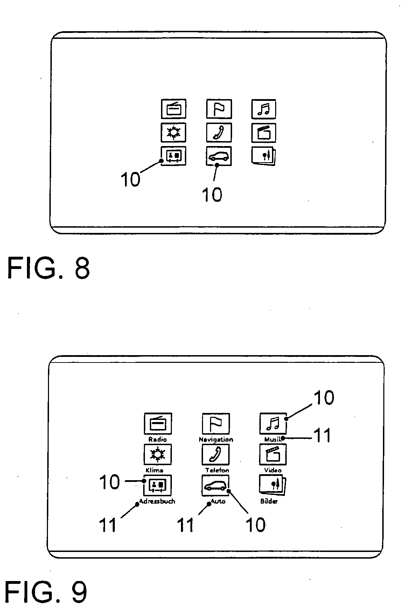

Im Folgenden wird mit Bezug zu den Fig. 3 bis 9 der Übergang von dem in Fig. 3 gezeigten ersten Anzeigemodus in den in Fig. 9 gezeigten zweiten Anzeigemodus erläutert:
Im Fahrzeug wird im Stehen die in Fig. 3 gezeigte Anzeige auf der Anzeigefläche 2 wiedergegeben. Der Fahrer setzt das Fahrzeug nun in Bewegung und überschreitet die Grenzgeschwindigkeit für den Übergang vom ersten Anzeigemodus in den zweiten Anzeigemodus. Dieses Überschreiten der Grenzgeschwindigkeit wird von der Steuervorrichtung 3 auf Basis der Daten von der Messvorrichtung 7 erfasst. Daraufhin erzeugt die Steuervorrichtung 3 eine Animation, d. h. eine Bewegung der graphischen Objekte 10, wie sie in den Fig. 4 bis 9 gezeigt ist.

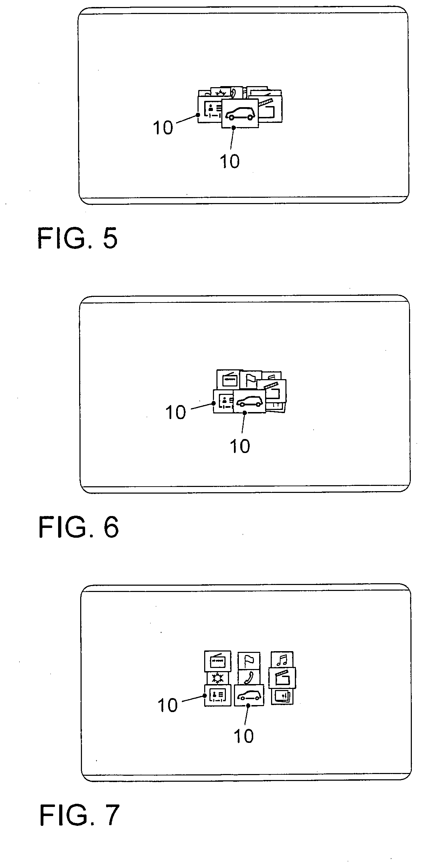

Zunächst verschwinden die Beschriftungen 11 der drei im Vordergrund dargestellten graphischen Elemente 10 (Fig. 4). Daraufhin bewegen sich die graphischen Objekte 10 aufeinander zu, wie dies in den Fig. 4 und 5 dargestellt ist, bis sie sich in einem zentralen Bereich der Anzeigefläche 2 vereinen. Am Ende dieser Vereinigung kann gegebenenfalls kurzzeitig eine inhaltsleere Anzeige auf der Anzeigefläche 2 wiedergegeben werden. Daraufhin werden die graphischen Objekte 10 wieder dargestellt. Sie bewegen sich nun voneinander weg in Richtung der Positionen der Darstellung in dem zweiten Anzeigemodus. Die Expansion der graphischen Objekte 10 ist in den Fig. 6 bis 9 gezeigt. Fig. 9 zeigt dabei den Endzustand der Anzeige in dem zweiten Anzeigemodus.

Die graphischen Objekte 10 werden im zweiten Anzeigemodus nebeneinander, überlappungsfrei in einem Raster dargestellt. Dabei ist jedem graphischen Objekt unabhängig von der Auswahl eines der graphischen Objekte eine feste Position in dem Raster zugeordnet. Ist die Bewegung der graphischen Objekte 10 in die Rasterdarstellung beendet, werden abschließend für alle graphischen Objekte 10 Beschriftungen 11 angezeigt.

In dem zweiten Anzeigemodus kann der Fahrer des Fahrzeugs alle graphischen Objekte 10 sehr schnell erfassen. Um ein bestimmtes Objekt 10 auszuwählen, wird somit sehr wenig Aufmerksamkeit vom Fahrer beansprucht, so dass er durch das Auswählen eines graphischen Objekts 10 nicht vom Fahrgeschehen abgelenkt wird. Die schnelle und intuitive Aufnahme der Information, wie sie im zweiten Anzeigemodus dargestellt wird, wird dadurch unterstützt, dass alle graphischen Objekte 10 überlappungsfrei in derselben Größe dargestellt werden. Ferner kann sich der Benutzer sehr einfach in der Rasterdarstellung orientieren, da die verschiedenen graphischen Objekte 10 einen festen Platz in dem Raster haben, den sich der Nutzer nach mehrmaliger Nutzung merken kann.

Unterschreitet das Fahrzeug danach wieder die Grenzgeschwindigkeit, gegebenenfalls unter Berücksichtigung der Hysterese, erzeugt die Steuervorrichtung 3 eine umgekehrte Animation von dem zweiten Anzeigemodus in den ersten Anzeigemodus. Dabei werden die graphischen Objekte 10 von der in Fig. 9 gezeigten Rasterdarstellung aufeinander zu bewegt, bis sie sich in dem zentralen Bereich vereinen und daraufhin wieder expandiert in Richtung der Positionen auf dem Ring, wie er in Fig. 2 oder 3 dargestellt ist. Auch bei dieser umgekehrten Animation werden die Beschriftungen 10 ausgeblendet und im Endzustand wieder eingeblendet. War in der Rasterdarstellung ein Objekt 10 markiert, wird dieses Objekt 10 in der Darstellung auf dem Ring des ersten Anzeigemodus im Vordergrund dargestellt.

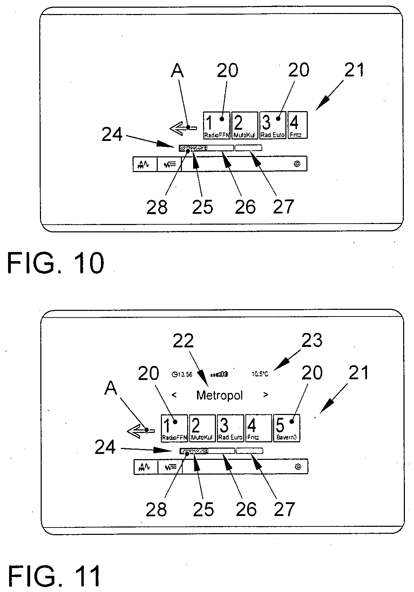

Mit Bezug zu den Fig. 9 bis 12 wird ein weiterer Aspekt des erfindungsgemäßen Verfahrens erläutert, der auch von der mit Bezug zu Fig. 1 beschriebenen Vorrichtung ausgeführt werden kann. In diesem Fall ist der Einsatz der erfindungsgemäßen Vorrichtung bzw. des erfindungsgemäßen Verfahrens nicht auf ein Fahrzeug beschränkt. Die Vorrichtung und das Verfahren können in beliebigen Geräten, insbesondere in tragbaren Geräten, wie einem Musikspieler, einem Mobiltelefon oder einem mobilen Navigationssystem eingesetzt werden. Selbstverständlich ist auch der Einsatz in einem Fahrzeug möglich.

Der zweite Aspekt des erfindungsgemäßen Verfahrens betrifft den Übergang von einer ersten Darstellung auf der Anzeigefläche 2 in eine zweite Darstellung auf der Anzeigefläche 2. Die erste Darstellung kann die Anzeige in dem ersten oder dem zweiten Anzeigemodus sein, wie sie in den Fig. 2, 3 und 9 gezeigt ist. Die zweite Darstellung betrifft beispielsweise den Kontext eines graphischen Objektes 10. Die zweite Darstellung wird insbesondere nach einer Auswahl eines graphischen Objekts 10 durch einen Nutzer mittels der Eingabeeinrichtung angezeigt. In diesem Fall wird somit ein anderer Informationsinhalt angezeigt und nicht nur ein verändertes Layout. Auch in diesem Fall wird jedoch kein abrupter Wechsel der Anzeige auf der Anzeigefläche 2 herbeigeführt, sondern ein fließender Übergang von der ersten Darstellung in die zweite Darstellung, wie es im Folgenden erläutert wird:
Wählt der Nutzer beispielsweise ausgehend von der Anzeige, wie sie in Fig. 9 gezeigt ist, das graphische Objekt 10 mit der Bezeichnung "Radio" aus, erzeugt die Steuervorrichtung 3 eine Animation, bei welcher die graphischen Objekte 10 nach außen voneinander weg bewegt werden. Kurzzeitig wird eine inhaltsleere Anzeige auf der Anzeigefläche 2 wiedergegeben. Daraufhin werden verschiedene andere graphische Objekte 20 der zweiten Darstellung auf der Anzeigefläche 2 zu ihrer Endposition hin bewegt. Wichtig bei dem zweiten Aspekt des erfindungsgemäßen Verfahrens ist die Bewegung der neu angezeigten graphischen Objekte 20, insbesondere die Bewegung eines Hauptobjekts, welches als Blickfang für den Nutzer bei diesem Übergang dient.

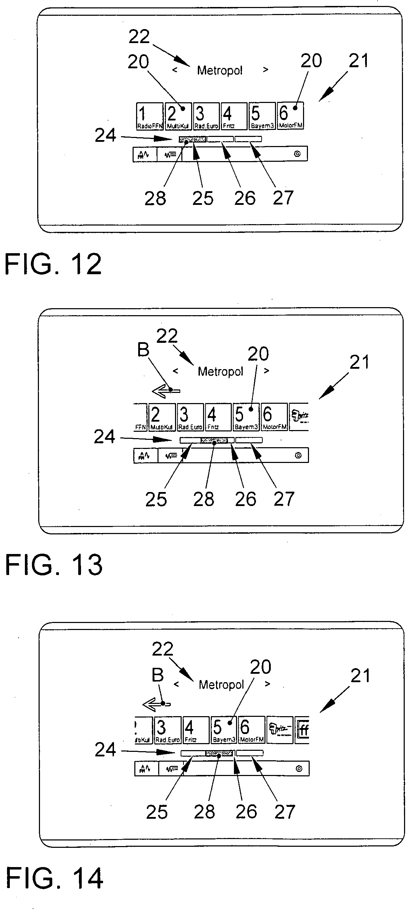

In dem in diesem Ausführungsbeispiel beschriebenen Übergang wird für die Radiofunktion eine Leiste 21 in die Anzeigefläche 2 hineinbewegt. Diese Leiste 21 enthält mehrere graphische Objekte 20, welche einzelne Radiosender repräsentieren. Die Leiste 21 wird in einem bestimmten Bewegungsmuster bei diesem Übergang auf der Anzeigefläche 2 bewegt. In dem hier beschriebenen Ausführungsbeispiel wird die Leiste 21 mit den graphischen Objekten 20 von rechts in Richtung des Pfeils A nach links bewegt. Dabei erscheinen immer mehr graphische Objekte 20, bis im Endzustand, wie in Fig. 12 gezeigt ist, insgesamt sechs graphische Objekte 20 auf der Leiste 21 dargestellt werden. Mit der Bewegung der Leiste 21 werden außerdem weitere Anzeigeelemente oder Schaltflächen 22, 23 und 24 eingeblendet.

Das Bewegungsmuster, welches die Leiste 21 ausführt, zeichnet sich dadurch aus, dass es einem Bewegungsmuster entspricht, welches in der zweiten Darstellung ausgeführt wird, wenn eines der graphischen Objekte 20 auf eine Eingabe mittels der Eingabeeinrichtung in der zweiten Darstellung bedient wird.

Der Nutzer kann z. B., um weitere graphische Objekte 20 für andere Radiosender zur Anzeige zu bringen, die graphischen Objekte 20 auf der Leiste 21 bewegen. Die Bewegung der graphischen Objekte 20 erfolgt dabei auch in Richtung des Pfeils A bzw. in entgegengesetzter Richtung. Beim Übergang von der ersten Darstellung in die zweite Darstellung wird dem Betrachter somit durch die Bewegung der Leiste 21 mit den graphischen Objekten 20 bereits vermittelt, wie die graphischen Objekte 20 in der zweiten Darstellung bewegt werden können. Die Art des Übergangs dient somit gleichzeitig als Bedienungsanleitung für die Betätigung von den graphischen Objekten 20 einer Liste in der zweiten Darstellungsart.

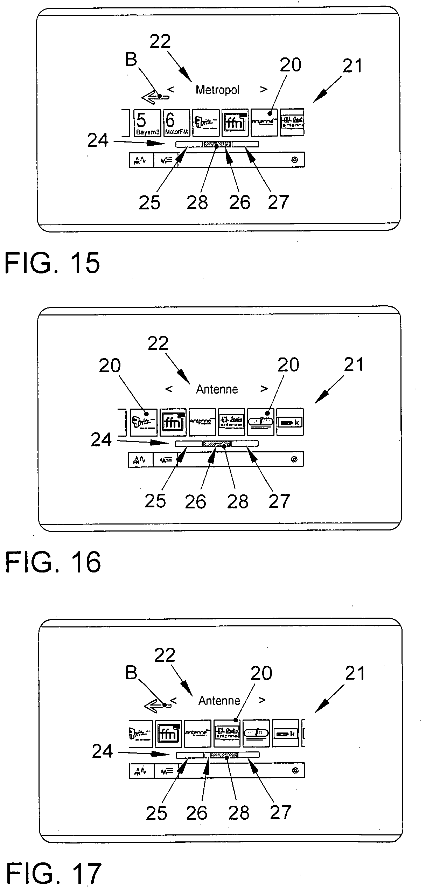

Wie in den Fig. 13 bis 19 gezeigt, kann der Nutzer nämlich die graphischen Objekte 20 beispielsweise mit einer Wischgeste in Richtung des Pfeils B bewegen, um die graphischen Objekte 20 nach links zu verschieben und andere graphische Elemente 20 für andere Radiosender zur Anzeige zu bringen. Im vorliegenden Fall enthält die Liste mit den Radiosendern insgesamt achtzehn Listeneinträge, denen jeweils ein graphisches Objekt 20 zugeordnet ist. Durch eine Wischgeste in Richtung des Pfeils B oder in entgegengesetzter Richtung kann der Nutzer die Anzeige der Listeneinträge entsprechend verändern. Das Bewegungsmuster dieser Bewegung in Richtung des Pfeils B bzw. in entgegengesetzter Richtung entspricht dabei dem Bewegungsmuster in Richtung des Pfeils A beim Übergang in die Darstellung der graphischen Objekte 20 für die Radiosender. Falls die Listeneinträge in einem anderen Bewegungsmuster verändert werden, beispielsweise in einer Schwenk- oder Drehbewegung, würde auch der Übergang in die zweite Darstellungsart mit den Radiosendern so erfolgen, dass die Liste mit den graphischen Objekten 20 in einer Schwenk- oder Drehbewegung auf der Anzeigefläche 2 hineinbewegt werden.

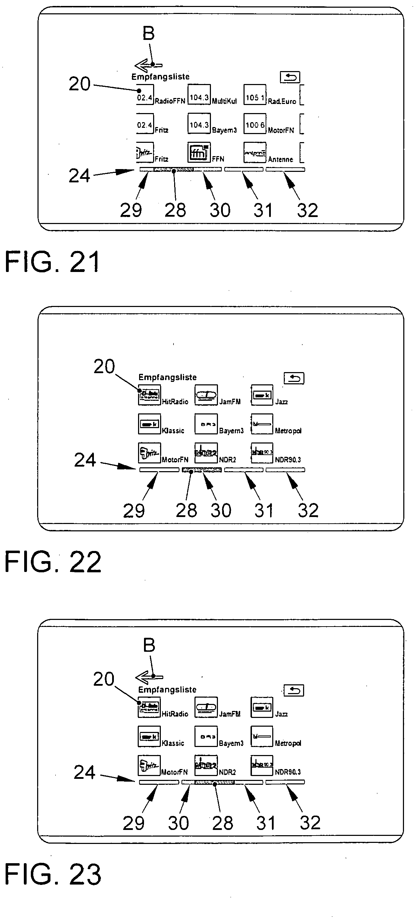

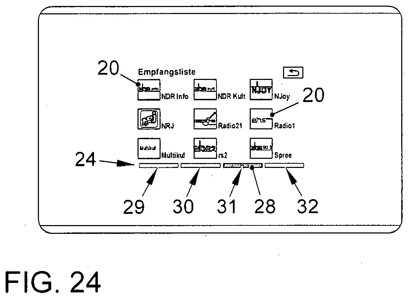

Mit Bezug zu den Fig. 12 bis 24 wird schließlich ein dritter Aspekt des erfindungsgemäßen Verfahrens erläutert, der auch von der mit Bezug zu Fig. 1 beschriebenen Vorrichtung ausgeführt werden kann. Auch dieser dritte Aspekt ist unabhängig von dem Einsatz im Fahrzeug. Er kann insbesondere auch in tragbaren Geräten eingesetzt werden.

Wie vorstehend erläutert können insgesamt achtzehn graphische Objekte 20, welche verschiedene Radiosender repräsentieren, auf der Anzeigefläche 2 dargestellt werden. Die Anzeigefläche 2 ist jedoch nicht groß genug, um alle achtzehn Objekte 20 gleichzeitig darzustellen. Es wird daher auf der Anzeigefläche 2 immer nur eine echte Teilmenge der Gesamtmenge der graphischen Objekte 20 angezeigt. Die angezeigte Teilmenge lässt sich durch einen Bedienvorgang, welcher mittels der Eingabeeinrichtung ausgeführt wird, verändern. Der dritte Aspekt des erfindungsgemäßen Verfahrens betrifft ein Verfahren zum Bereitstellen einer Benutzerschnittstelle, bei welcher die angezeigte Teilmenge der Objekte 20 verändert werden kann und dem Nutzer visualisiert wird, welche Teilmenge innerhalb der Gesamtmenge momentan angezeigt wird.

Wenn auf einer Anzeigefläche 2 nur eine Teilmenge einer Menge mit einer Vielzahl von Objekten angezeigt wird, wird dem Betrachter herkömmlicherweise als graphisches Element eine so genannte Bildlaufleiste (Scrollbar) angezeigt. Eine solche Bildlaufleiste umfasst zwei graphische Teilelemente: zum einen wird eine Leiste angezeigt, deren Länge die Größe der Gesamtmenge repräsentiert, zum anderen wird eine Markierung auf der Leiste angezeigt, deren Länge die Größe der angezeigten Teilmenge repräsentiert und deren Position relativ zu der Leiste dem Betrachter visualisiert, wo sich die angezeigte Teilmenge innerhalb der Gesamtmenge befindet. Die angezeigte Menge ist in diesem Fall somit insbesondere einer bestimmten Ordnung unterworfen.

Bei dem erfindungsgemäßen Verfahren gemäß dem dritten Aspekt ist die Benutzerschnittstelle und die Art der Visualisierung wie folgt modifiziert:
Die graphischen Objekte 20 werden in n disjunkte Teilmengen unterteilt. Dabei ist n eine natürliche Zahl die größer als 2 ist. Im hier beschriebenen Ausführungsbeispiel umfasst die Gesamtmenge der graphischen Objekte 20 insgesamt achtzehn Objekte 20. Diese Gesamtmenge ist in drei disjunkte Teilmengen unterteilt: Die erste Teilmenge umfasst die graphischen Objekte 20 Nr. 1 bis 6, die zweite Teilmenge umfasst die graphischen Objekte 20 Nr. 7 bis 12 und die dritte Teilmenge umfasst die graphischen Objekte 20 Nr. 13 bis 18.

Wie in Fig. 12 gezeigt, befindet sich unterhalb der Anzeige der graphischen Objekte 20 für die Radiosender ein graphisches Element, welches in zwei Teilelemente unterteilt ist. Das erste graphische Teilelement ist eine modifizierte Leiste 24. Die Leiste 24 ist wiederum in insgesamt n Segmente unterteilt, die beabstandet voneinander angeordnet sind. Im vorliegenden Fall werden somit die drei Segmente 25, 26 und 27 angezeigt.

Des Weiteren wird als zweites graphisches Teilelement eine Markierung 28 angezeigt. Wenn kein Bedienvorgang zum Verändern der anzuzeigenden Teilmenge der graphischen Objekte 20 ausgeführt wird, wird die Markierung 28 immer deckungsgleich mit einem der Segmente 25, 26 oder 27 angezeigt. Wird die Markierung 28 auf dem Segment 25 angezeigt, wird dem Betrachter visualisiert, dass die graphischen Objekte 20 für die ersten sechs Radiosender angezeigt werden, wird die Markierung 28 auf dem Segment 26 angezeigt, wird dem Betrachter visualisiert, dass die graphischen Objekte 20 der zweiten sechs Radiosender angezeigt werden und wird die Markierung 28 auf dem Segment 27 angezeigt, wird dem Betrachter visualisiert, dass die graphischen Objekte 20 für die dritten sechs Radiosender angezeigt werden.

Durch einen Bedienvorgang kann der Nutzer die angezeigte Teilmenge verändern. Umfasst die Eingabeeinrichtung beispielsweise eine berührungsempfindliche Oberfläche auf der Anzeigefläche 2, kann die Teilmenge durch eine Wischgeste verändert werden. Ausgehend von der in Fig. 12 gezeigten Anzeige kann der Nutzer beispielsweise mit seiner Fingerspitze die Leiste 21 mit den graphischen Objekten 20 berühren und wie in den Fig. 13 bis 19 gezeigt, die Fingerspitze in Richtung des Pfeils B bewegen. Diese Bewegung der Fingerspitze auf der berührungsempfindlichen Oberfläche auf der Anzeigefläche 2 wird von der Steuervorrichtung 3 erfasst und die Steuervorrichtung 3 verändert daraufhin entsprechend die auf der Anzeigefläche 2 wiedergegebene Anzeige. Mit der Bewegung der Fingerspitze werden nämlich die graphischen Objekte 20 in Richtung des Pfeils B im Wesentlichen stufenlos verschoben. Entsprechend wird die Markierung 28 auf der Leiste 24 in entgegen gesetzter Richtung stufenlos verschoben, so dass die Markierung 28 dem Betrachter immer darstellt, welche Teilmengen bzw. welcher Ausschnitt der Leiste 21 mit den graphischen Objekten 20 momentan angezeigt wird.

Statt den Finger im Bereich der Leiste 21 in Richtung des Pfeils B zu bewegen, könnte der Nutzer auch die Anzeigefläche 2 im Bereich der Markierung 28 berühren und die Fingerspitze entsprechend in die andere Richtung bewegen, um die angezeigte Teilmenge mit den graphischen Objekten 20 auf der Leiste 21 zu verändern und gleichzeitig die Markierung 28 auf der Leiste 24 im Wesentlichen stufenlos zu verschieben.

Nach Abschluss des Bedienvorgangs wird - im Gegensatz zu einer herkömmlichen Bildlaufleiste - die Markierung 28 jedoch automatisch in Abhängigkeit von der Position der Markierung 28 relativ zu den Segmenten 25 bis 27 der Leiste 24 auf eines der Segmente 25, 26 oder 27 bewegt. Die Markierung 28 wird insbesondere auf das Segment 25, 26 oder 27 bewegt, mit welchem die größte Überdeckung beim Abschluss des Bedienvorgangs vorlag. Entsprechend verschiebt sich die Teilmenge mit den graphischen Objekten 20 derart, dass die erste Teilmenge angezeigt wird, wenn sich die Markierung 28 auf dem Segment 25 befindet, die zweite Teilmenge angezeigt wird, wenn sich die Markierung 28 auf dem Segment 26 befindet, und die dritte Teilmenge angezeigt wird, wenn sich die Markierung 28 auf dem Segment 27 befindet. Wenn der Bedienvorgang abgeschlossen wird, springt dabei nicht etwa die Markierung 28 auf das entsprechende Segment 25, 26 oder 27. Vielmehr wird eine Animation, insbesondere eine gedämpfte Bewegung, der Markierung 28 zu der Position ausgeführt. Gleichermaßen werden die Positionen der graphischen Objekte 20 bewegt, bis die entsprechende Teilmenge angezeigt wird.

Bei dem erfindungsgemäßen Verfahren sind die anzeigbaren Teilmengen somit im Voraus festgelegt. Sie sind durch den Bedienvorgang vom Nutzer nicht frei wählbar. Im vorliegenden Fall lassen sich beispielsweise nicht die graphischen Objekte 20 für die Radiosender Nr. 3 bis 8 gleichzeitig darstellen, nachdem der Bedienvorgang abgeschlossen wurde.

Anstatt einer Wischgeste kann der Nutzer auch ein bestimmtes Segment 25, 26 oder 27 der Leiste 24 antippen, um die Teilmenge zu verändern. Die Segmente 25 bis 27 sowie die Markierung 28 sind somit als so genannte Schaltflächen ausgebildet, welche vom Nutzer mittels der Eingabeeinrichtung betätigt werden können.

Die Ausdehnung der Markierung 28, d. h. im vorliegenden Fall insbesondere die Länge der Markierung 28, relativ zu der Ausdehnung bzw. Länge der Segmente 25, 26 und 27, stellt für den Betrachter intuitiv erkennbar die Anzahl der graphischen Objekte 20 der momentan angezeigten Teilmenge relativ zu der Gesamtzahl der graphischen Objekte der Menge dar. Um die Markierung 28 von den Segmenten 25 bis 27 unterscheiden zu können, kann die Markierung 28 beispielsweise in einer anderen Farbe, anderen Transparenz oder mit einer anderen Flächenfüllung dargestellt werden.

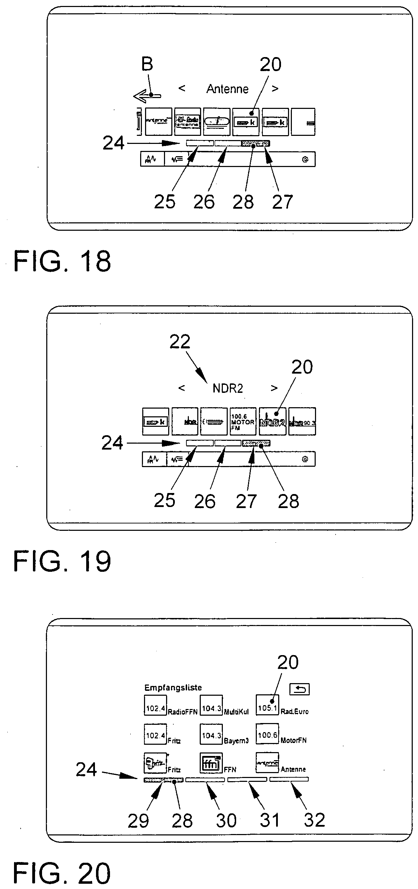

In den Fig. 20 bis 24 ist ein weiteres Beispiel des dritten Aspekt des erfindungsgemäßen Verfahrens gezeigt:
Bei diesem Beispiel werden die graphischen Objekte 20 nicht auf einer linearen, eindimensionalen Leiste 21 angezeigt, sondern, wie in Fig. 20 gezeigt, in einem zweidimensionalen Raster. In diesem Fall umfasst die Gesamtmenge der graphischen Objekte 20 für die Radiosender insgesamt siebenundzwanzig graphische Objekte 20. Diese siebenundzwanzig graphischen Objekte 20 werden in vier Teilmengen mit jeweils neun graphischen Objekten 20 unterteilt. Entsprechend umfasst die Leiste 24 vier Segmente 29 bis 32. Auf der Leiste 24 wird wie vorstehend erläutert die Markierung 28 angezeigt. Wie in den Fig. 20 bis 24 gezeigt, kann der Nutzer mittels der Eingabeeinrichtung die angezeigte Teilmenge von den ersten neun graphischen Objekten 20 für die Radiosendern zu den dritten neun graphischen Objekten 20 für die Radiosender verschieben, indem er beispielsweise die Markierung 28 auf der Leiste 24 verschiebt. Wie vorstehend erläutert ist das Verschieben der Markierung 28 im Wesentlichen stufenlos möglich. Nach Abschluss des Bedienvorgangs wird die Markierung 28 und entsprechend die angezeigten graphischen Objekte 20 in einer Animation so bewegt, dass eine im Voraus festgelegte Teilmenge mit neun graphischen Objekten 20 angezeigt wird.

Es wird darauf hingewiesen, dass nicht nur bei dem ersten Aspekt des erfindungsgemäßen Verfahrens, sondern auch bei dem zweiten und/oder dritten Aspekt des erfindungsgemäßen Verfahrens, die Geschwindigkeit des Fahrzeugs, welche der Steuervorrichtung 3 von der Messvorrichtung 7 übertragen wird, Einfluss auf die Geschwindigkeit der Animationen der graphischen Objekte haben kann. Insbesondere ist es möglich, dass bei höheren Fahrzeuggeschwindigkeiten Animationen schneller ablaufen als bei niedrigen Fahrzeuggeschwindigkeiten. Bei höheren Fahrzeuggeschwindigkeiten betrachtet insbesondere der Fahrer nämlich die Anzeigefläche 2 nur für einen kürzeren Zeitraum ununterbrochen, als bei langsameren Fahrzeuggeschwindigkeiten. Durch diese Anpassung an die Fahrzeuggeschwindigkeit kann somit erreicht werden, dass der Fahrer unabhängig von der Fahrzeuggeschwindigkeit dieselbe Bewegungsstrecke bei der Animation wahrnimmt. Dies erleichtert es dem Fahrer sich bei der Veränderung des Anzeigeinhalts zu orientieren und den veränderten Informationsinhalt schnell und intuitiv zu erfassen. Die Parameter der Animationen für die Darstellung der Informationen können somit ein Merkmal des erfindungsgemäßen Verfahrens und der erfindungsgemäßen Vorrichtung darstellen, welches optional verwirklicht werden kann. Bei der Bestimmung dieser Parameter wird insbesondere berücksichtigt, wie ein Fahrer eines Fahrzeugs Informationen während der Fahrt besonders effektiv erfassen kann.

### Bezugszeichenliste

- 1: Anzeigeeinrichtung
- 2: Anzeigefläche
- 3: Steuervorrichtung
- 4: Systemuhr
- 5: Speicher
- 6: Datenbus
- 7: Messvorrichtung für die Fahrzeuggeschwindigkeit
- 10: graphische Objekte
- 11: alphanumerische Beschriftung
- 20: graphische Objekte
- 21: Leiste
- 22: Anzeigeelement
- 23: Anzeigeelement
- 24: Leiste
- 25: Segment der Leiste 24
- 26: Segment der Leiste 24
- 27: Segment der Leiste 24
- 28: Markierung
- 29: Segment der Leiste 24
- 30: Segment der Leiste 24
- 31: Segment der Leiste 24
- 32: Segment der Leiste 24

## Patentansprüche

1. Verfahren zum Anzeigen von Informationen auf einer Anzeigefläche (2), bei dem
- mittels einer Steuervorrichtung (3) ein Übergang von einer ersten Darstellung in eine zweite Darstellung auf der Anzeigefläche (2) erzeugt wird,
- wobei die zweite Darstellung nach einer Auswahl eines graphischen Objekts (10) der ersten Darstellung durch einen Nutzer mittels einer Eingabeeinrichtung angezeigt wird, und
- wobei die zweite Darstellung einen Kontext des ausgewählten graphischen Objekts (10) betrifft und ein anderer Informationsgehalt als bei der ersten Darstellung angezeigt wird,
**dadurch gekennzeichnet, dass**
- bei diesem Übergang zumindest ein erstes graphisches Objekt (20) auf der Anzeigefläche (2) bewegt wird, und
- in der zweiten Darstellung zumindest ein zweites graphisches Objekt (20) auf eine Eingabe in einem Bewegungsmuster bewegt wird, um die Eingabe zu visualisieren, wobei
- beim Übergang von der ersten Darstellung in die zweite Darstellung die Steuervorrichtung (3) die Anzeigefläche (2) so ansteuert, dass das erste graphische Objekt (20) in demselben Bewegungsmuster bewegt wird, wie bei der Visualisierung der Eingabe in der zweiten Darstellung, wobei das Bewegungsmuster einer Bedienbewegung bei der Eingabe entspricht.

2. Verfahren nach Anspruch 1,
**dadurch gekennzeichnet,**
**dass** das Bewegungsmuster eine Bewegung auf einer Trajektorie ist.

3. Verfahren nach Anspruch 2,
**dadurch gekennzeichnet,**
**dass** beim Übergang in die zweite Darstellung das zumindest eine graphische Objekt (20) auf zumindest einem Abschnitt der Trajektorie bewegt wird.

4. Verfahren nach einem der vorhergehenden Ansprüche,
**dadurch gekennzeichnet,**
**dass** das Bewegungsmuster eine Dreh- oder Schwenkbewegung ist.

5. Verfahren nach einem der vorhergehenden Ansprüche
**dadurch gekennzeichnet,**
**dass** die Geschwindigkeit und/oder Beschleunigung des graphischen Objekts (20) beim Übergang von der ersten Darstellung in die zweite Darstellung der Geschwindigkeit und/oder Beschleunigung bei der Visualisierung der Eingabe in der zweiten Darstellung entspricht.

6. Vorrichtung zum Anzeigen von Informationen mit
- einer Anzeigefläche (2),
- einer Steuervorrichtung (3) zum Steuern der Anzeige auf der Anzeigefläche (2),
- wobei mittels der Steuervorrichtung (3) ein Übergang von einer ersten Darstellung in eine zweite Darstellung auf der Anzeigefläche (2) erzeugbar ist, wobei,
- einer Eingabeeinrichtung, die mit der Steuervorrichtung (3) gekoppelt ist, wobei mittels der Steuervorrichtung (3) die Anzeigefläche (2) so ansteuerbar ist, dass die zweite Darstellung nach einer Auswahl eines graphischen Objekts (10) der ersten Darstellung durch einen Nutzer mittels der Eingabeeinrichtung angezeigt wird,
- wobei die zweite Darstellung einen Kontext des ausgewählten graphischen Objekts (10) betrifft und ein anderer Informationsgehalt als bei der ersten Darstellung angezeigt wird,
**dadurch gekennzeichnet, dass**
- in der zweiten Darstellung zur Visualisierung einer mittels der Eingabeeinrichtung ausgeführten Eingabe zumindest ein zweites graphisches graphische Objekt (20) in einem Bewegungsmuster bewegt wird, und
- mittels der Steuervorrichtung (3) die Anzeigefläche (2) so ansteuerbar ist, dass bei diesem Übergang zumindest ein erstes graphisches Objekt (20) auf der Anzeigefläche (2) bewegt wird beim Übergang von der ersten Darstellung in die zweite Darstellung das erste graphische Objekt (20) in demselben Bewegungsmuster bewegt wird, wie bei der Visualisierung der Eingabe in der zweiten Darstellung, wobei das Bewegungsmuster einer Bedienbewegung bei der Eingabe entspricht.

7. Vorrichtung nach Anspruch 6,
**dadurch gekennzeichnet,**
**dass** die Eingabeeinrichtung eine berührungsempfindliche Oberfläche auf der Anzeigefläche (2) umfasst

8. Fahrzeug mit einer Vorrichtung nach Anspruch 6 oder 7.

## Claims

1. A method for displaying information on a display surface (2), in which
- a transition from a first presentation to a second presentation is produced on the display surface (2) by means of a control device (3),
- wherein the second presentation is displayed after a selection of a graphical object (10) of the first presentation by a user by means of an input device, and
- wherein the second presentation concerns a context of the selected graphical object (10) and another information content is displayed than in the first presentation,
**characterized in that**
- in this transition at least one first graphical object (20) is moved on the display surface (2), and
- in the second presentation at least one second graphical object (20) is moved in a motion pattern upon an input, in order to visualize the input, wherein
- in the transition from the first presentation to the second presentation the control device (3) controls the display surface (2) in such a way that the first graphic object (20) is moved in the same motion pattern, as in the visualization of the input in the second presentation, wherein the motion pattern corresponds to an operating movement during the input.

2. A method according to Claim 1,
**characterized in**
**that** the motion pattern is a movement on a trajectory.

3. A method according to Claim 2,
**characterized in**
**that** in the transition to the second presentation the at least one graphic object (20) is moved on at least one section of the trajectory.

4. A method according to any one of the preceding claims,
**characterized in**
**that** the motion pattern is a rotational or pivotal movement.

5. A method according to any one of the preceding claims,
**characterized in**
**that** the speed and/or acceleration of the graphical object (20) in the transition from the first presentation to the second presentation corresponds to the speed and/or acceleration in the visualization of the input in the second presentation.

6. A device for displaying information having
- a display surface (2),
- a control device (3) for controlling the display on the display surface (2),
- wherein by means of the control device (3) a transition from a first presentation to a second presentation can be produced on the display surface (2), wherein
- an input device, which is coupled with the control device (3), wherein by means of the control device (3) the display surface (2) can be controlled in such a way that the second presentation is displayed after a selection of a graphic object (10) of the first presentation by a user by means of the input device,
- wherein the second presentation concerns a context of the selected graphic object (10) and another information content is displayed than in the first presentation,
**characterized in that**
- in the second presentation for visualization of an input performed by means of the input device at least one second graphic object (20) is moved in a motion pattern, and
- by means of the control device (3) the display surface (2) is controllable in such a way that in said transition at least one first graphic object (20) is moved on the display surface (2), in the transition from the first presentation to the second presentation the first graphic object (20) is moved in the same motion pattern, as in the visualization of the input in the second presentation, wherein the motion pattern corresponds to an operating motion during the input.

7. A device according to Claim 6,
**characterized in**
**that** the input device comprises a touch-sensitive surface on the display surface (2).

8. A vehicle with a device according to Claim 6 or 7.

## Revendications

1. Procédé d'affichage d'informations sur une surface d'affichage (2), dans lequel
- au moyen d'un dispositif de commande (3), une transition entre une première représentation et une deuxième représentation est générée sur la surface d'affichage (2),
- la deuxième représentation étant affichée selon une sélection d'un objet graphique (10) de la première représentation par un utilisateur au moyen d'un dispositif d'entrée et
- la deuxième représentation concernant un contexte de l'objet graphique (10) sélectionné et un contenu d'information différent de celui de la première représentation,
**caractérisé en ce que**
- dans cette transition, au moins un premier objet graphique (20) est déplacé sur la surface d'affichage (2) et
- dans la deuxième représentation, au moins un deuxième objet graphique (20) est déplacé lors d'une entrée dans un modèle de mouvement, afin de visualiser l'entrée,
- lors de la transition de la première représentation vers la deuxième représentation, le dispositif de commande (3) contrôle la surface d'affichage (2) de façon à ce que le premier objet graphique (20) soit déplacé dans le même modèle de mouvement que lors de la visualisation de l'entrée dans la deuxième représentation, le modèle de mouvement correspondant à un mouvement de commande lors de l'entrée.

2. Procédé selon la revendication 1,
**caractérisé en ce que**
le modèle de mouvement est un mouvement sur une trajectoire.

3. Procédé selon la revendication 2,
**caractérisé en ce que**
lors de la transition vers la deuxième représentation, l'au moins un objet graphique (20) est déplacé sur au moins une portion de la trajectoire.

4. Procédé selon l'une des revendications précédentes,
**caractérisé en ce que**
le modèle de déplacement est un mouvement de rotation ou de pivotement.

5. Procédé selon l'une des revendications précédentes,
**caractérisé en ce que**
la vitesse et/ou l'accélération de l'objet graphique (20) lors de la transition de la première représentation vers la deuxième représentation, à la vitesse et/ou à l'accélération lors du la visualisation de l'entrée dans la deuxième représentation.

6. Dispositif d'affichage d'informations avec
- une surface d'affichage (2),
- un dispositif de commande (3) pour le contrôle de l'affichage sur la surface d'affichage (2),
- moyennant quoi, au moyen du dispositif de commande (3), une transition entre une première représentation et une deuxième représentation peut être générée sur la surface d'affichage (2),
- un dispositif d'entrée couplé avec le dispositif de commande (3), le dispositif de commande (3) permettant de contrôler la surface d'affichage (2), de façon à ce que la deuxième représentation soit affichée selon une sélection d'un objet graphique (10) de la première représentation par un utilisateur au moyen du dispositif d'entrée,
- la deuxième représentation concernant un contexte de l'objet graphique (10) sélectionné et un contenu d'information différent de celui de la première représentation étant affiché,
**caractérisé en ce que**
- dans la deuxième représentation, pour la visualisation d'une entrée effectuée au moyen du dispositif d'entrée, au moins un deuxième objet graphique (20) est déplacé dans un modèle de mouvement et
- au moyen du dispositif de commande (3), la surface d'affichage (2) peut être contrôlée de façon à ce que, lors de cette transition, au moins un premier objet graphique (20) soit déplacé sur la surface d'affichage (2) et lors de la transition de la première représentation vers la deuxième représentation, le premier objet graphique (20) soit déplacé dans le même modèle de mouvement que lors de la visualisation de l'entrée dans la deuxième représentation, le modèle de mouvement correspondant à un mouvement de commande lors de l'entrée.

7. Dispositif selon la revendication 6,
**caractérisé en ce que**
le dispositif d'entrée comprend une surface tactile sur la surface d'affichage (2).

8. Véhicule avec un dispositif selon la revendication 6 ou 7.
